# EUROPÄISCHE PATENTANMELDUNG

(11) **EP 3 889 359 A1**
(43) Veröffentlichungstag der Anmeldung: **06.10.2021**
(21) Anmeldenummer: 20166990.0
(22) Anmeldetag: 31.03.2020
(51) Int. Cl.: E02D 31/02, B29C 48/00, B29C 48/08, B29C 48/13, B29C 48/285

(54) **VERFAHREN ZUM HERSTELLEN EINER FOLIE AUS POLYETHYLEN; FOLIE AUS POLYETHYLEN**

(71) Anmelder: Recyplast Holding AG, 6302 Zug (CH)
(72) Erfinder: Marti, Silvio, 8640 Rapperswil (SG) (CH); Dicken von Oetinger, Christoph, 8700 Küsnacht (ZH) (CH)
(74) Vertreter: Durm Patentanwälte PartG mbB

(57) **Zusammenfassung**

Ein Verfahren zum Herstellen einer Folie aus Polyethylen, umfassend die Schritte:
Bereitstellen eines ersten Granulats aus Recyclat, das aus der Verbundfolie gebrauchter Getränkekartons gewonnen wurde und aus LDPE und kleinen Aluminium-Partikel besteht,
Bereitstellen eines zweiten Granulats aus HDPE,
gemeinsames Extrudieren der Granulate, wobei ein homogenes, fließfähiges Polyethylen-Gemisch entsteht,
Drücken des fließfähigen Polyethylen-Gemischs durch eine Breitschlitzdüse 16, sodass eine Folie mit eingelagerten Aluminium-Partikeln geformt wird.

Mittels des Verfahrens lässt sich insbesondere eine Noppenfolie für den Grundmauerschutz herstellen. Die eingelagerten Aluminium-Partikel erhöhen die Festigkeit.

## Beschreibung

Die Erfindung betrifft ein Verfahren zum Herstellen einer Folie aus Polyethylen, insbesondere für den Grundmauerschutz, sowie eine entsprechende Folie.

Mauern von Bauwerken müssen gegen Feuchtigkeit im Mauerwerk, Schimmelbildung und weiteren Problemen geschützt werden. Hierzu werden spezielle Folien oder Bahnen, insbesondere Noppenbahnen aus widerstandsfähigem und robustem Kunststoff eingesetzt. Mechanische Stabilität und Haltbarkeit solcher Folien sowie ihre Dichtigkeit gegenüber Feuchtigkeit sind wichtige Eigenschaften. Auf der anderen Seite müssen Baumaterialien möglichst preiswert in der Herstellung sein, um die Kosten für Bau und gegebenenfalls Sanierung gering zu halten.

Bewährt haben sich Folien aus Polyethylen hoher Dichte, sogenanntem HDPE-Kunststoff. Wenn es um den Schutz von Grundmauern geht, kommen oft Noppenbahnen oder Noppenfolien zum Einsatz. Die hohe Druckstabilität dieser Noppenfolien beruht auf einer speziellen dreidimensionalen Form mit eingeprägten Noppen. Auf diese Weise erhält die Folie eine hohe mechanische Belastbarkeit und Druckfestigkeit. Bei vertikaler Verlegung kann sie den Druck des Erdreichs auf die Abdichtung der zu schützenden Mauer besser auffangen als eine vollständig ebene Folie.

DE 20 2006 001 699 U1 beschreibt ein Abdeckelement zum Schutz von Bauwerksteilen sowie eine Walze zu dessen Herstellung. Die dort beschriebene Folie ist ca. 0,5 mm dick und hat Noppen in Form eines Kegelstumpfs. Im eingebauten Zustand liegen die Deckflächen der Noppen an der Außenseite des Bauwerks an. Der auf die Rückseite vom Erdreich ausgeübte Druck wird auf die Deckflächen der Noppen verteilt. Die Noppenfolie wird im Vakuum-Tiefziehverfahren hergestellt mittels einer Walze mit noppenartigen Stempeln.

EP 2 942 173 A1 beschreibt ein Verfahren zur Herstellung von Granulat zum Spritzgießen. Restabfall, der beim Recyceln von Getränkekartons anfällt und im Wesentlichen aus einem Verbund von thermoplastischem Kunststoff und Aluminiumfolie besteht, wird zu Restabfall-Schnipseln zerkleinert. Sodann werden diese Restabfall-Schnipsel zu einem zusammenhängenden Materialstrang agglomeriert, wobei der in den Restabfall-Schnipseln enthaltene thermoplastische Kunststoff teilweise verflüssigt wird. Der heiße Materialstrang, welcher teigähnliche Konsistenz aufweist, wird sodann in kurze Strangabschnitte zerschnitten. Die einzelnen Strangabschnitte werden abgekühlt, sodass sie erhärten, und dann sofort zu einem Granulat mit einer Korngröße von 6 mm bis 10 mm zerkleinert. Das so hergestellte Granulat aus Recyclat enthält kleine Stücke der Aluminiumfolie, die aus der recyclierten Verbundfolie der Getränkekartons stammen. Das Granulat kann zu Formteilen weiterverarbeitet werden. Hierzu befördert eine Extrudereinheit das geschmolzene Granulat in eine Spritzeinheit, in der das Material mithilfe eines Kolbens in eine Spritzgussform gedrückt wird. Um die Eignung des Granulats zum Spritzgießen zu gewährleisten, müssen die darin enthaltenen Partikel von Aluminiumfolie so klein sein, dass sie die Düsen und Kanäle der Spritzgussmaschine nicht verstopfen.

Folien für die Verwendung als Baumaterial, insbesondere für den Grundmauerschutz, werden üblicherweise aus Polyethylen hoher Dichte (HDPE) hergestellt, beispielsweise durch das in der erwähnten DE 20 2006 001 699 U1 beschriebene Vakuum-Tiefziehverfahren. Polyethylen, insbesondere HDPE ist allerdings ein teurer Werkstoff. Anstelle von frisch hergestelltem Polyethylen wird deshalb oft recycliertes PE in Form von Regranulat verwendet, das aus hochwertigen und sortenreinen Fraktionen gewonnen wird, zum Beispiel aus PE-Flaschen oder aussortierten Kunststoffbehältern von Waschmitteln.

Der Erfindung liegt das technische Problem zugrunde, eine Folie aus Polyethylen, welche für Bauzwecke gut geeignet ist, sowohl kostengünstig als auch in sehr guter Qualität herzustellen sowie eine entsprechende Folie zur Verfügung zu stellen.

Die Aufgabe wird gelöst durch das im Patentanspruch 1 angegebene Verfahren.

Erfindungsgemäß werden zwei unterschiedliche Granulate bereitgestellt. Das erste Granulat besteht aus einem speziellen Recyclat, das aus Restabfall, nämlich untrennbaren Kunststoff-Aluminium-Verbundfolien von Lebensmittel-Verpackungen, insbesondere gebrauchter Getränkekartons gewonnen wurde, und das im Wesentlichen aus Polyethylen niedriger Dichte, sog. LDPE, und eingelagert kleinen Aluminium-Partikeln besteht. Dieses erste Granulat kann beispielsweise durch das in EP 2 942 173 A1 beschriebene Verfahren hergestellt worden sein. Das Recyclat enthält ungefähr 10 bis 20 Gewichts-Prozent Aluminiumpartikel.

Das zweite Granulat besteht im Wesentlichen aus Polyethylen hoher Dichte (HDPE), wie es üblicherweise zur Herstellung hochwertiger Polyethylen-Folien oder -Bahnen verwendet wird. Im Idealfall wird frisches HDPE eingesetzt. Aus Kostengründen wird man aber HDPE-Regranulat aus aus hochwertigen Fraktionen bevorzugen.

Im nächsten Schritt werden die beiden Granulate nicht etwa getrennt oder coextrudiert, sondern gemeinsam extrudiert. Dabei verflüssigen sich die in den beiden Sorten von Granulaten enthaltenen thermoplastischen Kunststoffe teilweise und vermischen bzw. verbinden sich zu einem homogenen fließfähigen Polyethylen-Gemisch. Dabei verteilen sich die in dem ersten Granulat enthaltenen Aluminium-Partikel gleichmäßig in der fließfähigen Kunststoff-Masse.

Das fließfähige Polyethylen-Gemisch wird dann durch eine Breitschlitzdüse gedrückt, wodurch die plastische Masse zu einer Folie umgeformt wird. Nach dem Erkalten und Erstarren des Materials enthält die Folie die ursprünglich aus dem LDPE-Aluminium-Recyclat stammenden Aluminium-Partikel in gleichmäßiger Verteilung über den Querschnitt.

Das erfindungsgemäße Verfahren hat erhebliche Vorteile: Die Verwendung eines Anteils aus Recyclat reduziert die Menge des benötigten Polyethylens hoher Dichte (HDPE), spart also Materialkosten. Dabei erhöhen die in der Folie eingelagerten Aluminium-Partikel aus dem Recyclat die Festigkeit des hergestellten Produkts, und führen daneben auch noch zu einem hübschen optischen Glitzereffekt. Das erfindungsgemäße Verfahren erschließt also eine weitere wirtschaftliche und technisch sinnvolle Möglichkeit zur Wiederverwertung von problematischen Restabfällen, nämlich den untrennbaren Verbundfolien aus gebrauchten Getränkekartons oder Lebensmittel-Verpackungen.

Zweischnecken-Extruder, wie sie vorzugsweise für das gemeinsame Extrudieren der beiden Granulat-Fraktionen erforderlich sind, werden üblicherweise nur in der Herstellung von Masterbatches und Compounds, also sehr genau rezeptierte und oft teuren Materialmischungen verwendet. Dabei werden sehr genaue und damit auch sehr teure gravimetrische Dosiersysteme benötigt. Im Rahmen des vorliegenden Verfahrens spielt die genaue Dosierung der beiden Granulate hingegen keine große Rolle; das Mischungsverhältnis muss nur ungefähr eingehalten werden. Deshalb kann das Dosieren der Granulate mit vergleichsweise einfachen Schnecken-Förderern erfolgen, was die Herstellkosten der Folie senkt.

Das Vermischen und gemeinsame Extrudieren der beiden Granulate erfolgt vorzugsweise in einem Zweischnecken-Extruder. Dabei erfolgt das Extrudieren der thermoplastischen Kunststoffe unter Druck und Temperatur, vorzugsweise bei einer Temperatur zwischen 150 und 220 Grad Celsius. Beste Ergebnisse konnten bei einer Temperatur zwischen 170 und 190 Grad Celsius erzielt werden.

Die Herstellung einer Folie für Bauzwecke, insbesondere für den Grundmauerschutz, ausschließlich aus LDPE-Recycling-Granulat würde den hohen Qualitätsansprüchen nicht gerecht werden. Aus Kostengründen sollte allerdings der Anteil an LDPE-Recyclat mit Aluminiumpartikeln so hoch wie möglich sein. Optimal ist es, wenn 25 bis 50 Prozent von diesem Recyclat verwendet wird, vorzugsweise 30 bis 40 Prozent. Wesentlich dabei ist, dass die in dem Recyclat enthaltenen Aluminium-Partikel, die aus den mechanisch untrennbaren Verbundfolien der Getränkekartons stammen, die Festigkeit und damit die Qualität der mittels des erfindungsgemäßen Verfahrens erzeugten Polyethylen-Folie erhöht und deshalb der Anteil des aluminiumhaltigen Recyclats höher sein kann als wenn andere LDPE-Recyclate ohne Aluminium-Partikel verarbeitet werden würden.

Optional können dem aufgeschmolzenen Polyethylen-Gemisch zwischen 5 und 30 Prozent mineralische Füllstoffe beigemischt werden. Bevorzugt wird pulverförmiges Kalziumcarbonat (CaC0₃) zugesetzt. Als optimal hat sich eine Menge von 10 bis 20 Prozent beigemischtem Füllstoff erwiesen. Dies führt zu einer weiteren Kostenersparnis.

Das durch gemeinsames Extrudieren der beiden Granulate erzeugte fließfähige Polyethylen-Gemisch wird durch die Breitschlitzdüse zu einer Folie geformt, welche vorzugsweise eine Dicke zwischen 0,3 mm und 0,6 mm, besonders bevorzugt von ungefähr 0,5 mm hat. Die aus dem Recyclat stammenden Aluminium-Partikel dürfen nicht größer sein als die Dicke der Folie. Die im Recyclat enthaltenen Aluminium-Partikel haben vorzugsweise einen Durchmesser, der nicht größer als 0,3 mm ist. Dabei ist zu beachten, dass die Aluminium-Partikel aus Folie stammen, also dünn sind im Vergleich zu ihrer Länge und Breite. Auch ist Aluminium relativ weich und lässt sich deshalb leicht biegen. Dies sind wichtige Voraussetzungen dafür, dass das Recyclat mit eingelagerten Aluminium-Partikeln nicht nur problemlos extrudiert, sondern auch durch die Breitschlitzdüse zu einer relativ dünnen Folie umgeformt werden kann. Die Aluminium-Partikel richten sich dabei automatisch so aus, dass sie bevorzugt parallel zur Oberseite bzw. Unterseite der Folie liegen. Aufgrund der vollständigen Durchmischung der beiden Granulate durch das gemeinsame Aufschmelzen in einem einzigen Extruder ergibt sich automatisch eine gleichmäßige Verteilung der aus dem Recyclat stammenden Aluminium-Partikel über den Querschnitt der Folie.

Optional kann das heiße fließfähige Polyethylen-Gemisch vor dem Drücken durch die Breitschlitzdüse durch ein Sieb gepumpt werden. Verunreinigungen oder zu große Aluminium-Partikel werden dadurch von der nachfolgenden Breitschlitzdüse ferngehalten. Bevorzugt wird das fließfähige Polyethylen-Gemisch mittels einer Schmelzpumpe aus dem Zweischnecken-Extruder durch einen Siebwechsler und die unmittelbar anschließende Breitschlitzdüse gepumpt.

Das erfindungsgemäße Verfahren ist besonders gut geeignet zum Herstellen einer Noppenfolie bzw. Noppenbahn für den Grundmauerschutz. Hierzu wird die von der Breitschlitzdüse geformte Folie unmittelbar anschließend in plastischem Zustand über eine Noppenwalze gelegt, welche die Noppen in die Folie einprägt. Da bei Noppenfolien für den Grundmauerschutz hohe Stoß-, Druck- und Bruchfestigkeit besonders wichtige Eigenschaften sind, entfalten sich gerade bei dieser Art von Folie die stabilitätserhöhenden Eigenschaften der eingelagerten Aluminium-Partikel besonders gut.

Die gestellte Aufgabe wird auch gelöst durch die im Patentanspruch 10 angegebene Folie, welche erfindungsgemäß durch Extrudieren eines Gemischs aus zwei Granulaten hergestellt wird, vorzugsweise durch das vorstehend beschriebene Verfahren.

Dabei ist das erste Granulat ein Recyclat, das aus Kunststoff-Aluminium-Verbundfolie von Lebensmittel-Verpackungen, vorzugsweise gebrauchter Getränkekartons gewonnen wurde, also im Wesentlichen aus Polyethylen niedriger Dichte (LDPE) und darin enthaltenen kleinen Aluminium-Partikeln besteht. Das Recyclat enthält zwischen 10 und 20 Gewichts-Prozent Aluminium-Partikel.

Das zweite Granulat besteht im Wesentlichen aus Polyethylen hoher Dichte (HDPE), wobei es sich entweder um frisches PE oder um hochwertiges HDPE-Regranulat handeln kann. Die in dem Recyclat-Granulat enthaltenen Aluminium-Partikel finden sich in der Folie wieder und sind gleichmäßig über den Querschnitt verteilt.

Die erfindungsgemäße Folie zeichnet sich durch hohe strukturelle Festigkeit aus, zu der die eingelagerten Aluminium-Partikel, die aus dem ersten Granulat stammen, einen wesentlichen Beitrag liefern. Außerdem ist die teilweise aus LDPE-Recyclat hergestellte Polyethylen-Folie vergleichsweise kostengünstig herzustellen. Die Folie ist besonders gut geeignet für die Verwendung als Baumaterial, insbesondere für den Schutz von Außenmauern von Gebäuden und zur Abdichtung von Grundmauern gegen das Erdreich.

Bevorzugt beträgt der Anteil des ersten Granulats aus PE-Alu-Recyclat zwischen 25 und 50 Prozent, vorzugsweise 30 bis 40 Prozent. Dieses Verhältnis zwischen erstem aluminiumhaltigen Recyclat und zweitem PE-Granulat reduziert die Materialkosten deutlich bei gleichzeitig hoher Qualität, insbesondere Festigkeit der Folie.

Die Dicke der Folie beträgt vorzugsweise zwischen 0,3 mm und 2,0 mm, besonders bevorzugt um 0,5 mm. Die eingelagerten Aluminium-Partikel, die aus dem Recyclat stammen, sollten einen Durchmesser haben, der höchstens halb so groß ist wie die Dicke der Folie. In einer besonders bevorzugten Ausführung hat die Folie eine Dicke zwischen 0,3 mm und 0,6 mm und haben die eingelagerten Aluminium-Partikel aus dem Recyclat einen Durchmesser zwischen 0,1 mm und 0,3 mm.

Für den Grundmauerschutz besonders geeignet sind Folien, die eingeprägte Noppen haben. Bei solchen Noppenfolien oder Noppenbahnen kommen die mechanischen Eigenschaften der aus dem Recyclat stammenden Aluminium-Partikel, die gleichmäßig über den Querschnitt der Folie verteilt sind, besonders gut zur Wirkung.

Im Folgenden wird beispielhaft ein Verfahren zum Herstellen einer Noppenfolie für den Grundmauerschutz näher erläutert. Ferner werden zwei Varianten der erfindungsgemäßen Folie im Detail beschrieben. In den beigefügten Abbildungen zeigen:

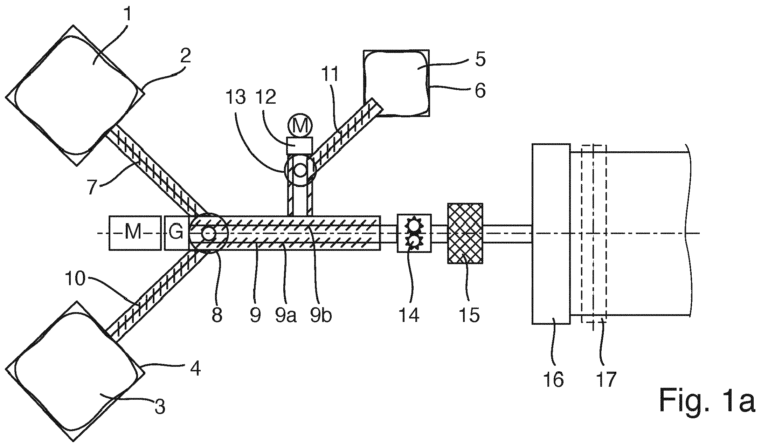

- Figur 1a: eine Anlage zum Herstellen einer Noppenfolie aus Polyethylen, stark vereinfacht, von oben;
- Figur 1 b: die Anlage von Fig. 1a, von der Seite;
- Figur 2a: eine Noppenfolie, in einem Horizontalabschnitt;
- Figur 2b: einen stark vergrößerten Ausschnitt von Fig. 2a, in einer ersten Variante;
- Figur 2c: einen stark vergrößerten Ausschnitt von Fig. 2a, in einer zweiten Variante.

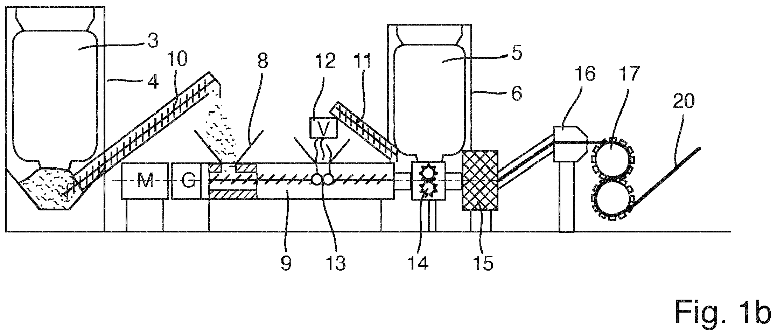

In den Figuren 1a und 1b ist zu erkennen, dass zwei unterschiedliche Granulate bereitgestellt werden. Ein erster Behälter 1 enthält ein erstes Granulat aus Recyclat, das aus der Verbundfolie gebrauchter Getränkekartons gewonnen wurde und im Wesentlichen aus Polyethylen und eingelagerten kleinen Aluminium-Partikeln besteht. Die Herstellung dieses Granulats aus Restabfall ist in EP 2 942 173 A1 im Detail beschrieben. Das Granulat hat eine mittlere Korngröße um 8 mm und wird in einem ersten großen Behälter 1 aus Plastik, einem sogenannten "big bag" angeliefert. Der Behälter 1 hängt in einem ersten Ständer 2.

Ein zweiter Behälter 3 enthält ein zweites Granulat, das im Wesentlichen aus frischem Polyethylen hoher Dichte (HDPE, High Density Poly-Ethylen) besteht. Der zweite Behälter 3 hängt in einem zweiten Ständer 4.

Ein dritter, kleinerer Behälter 5 enthält pulverförmiges Calziumcarbonat (CaCO₃) und hängt in einem dritten Ständer 6.

Ein erster Schneckenförderer 7 fördert Recycling-Granulat aus dem ersten Behälter 1 in einen Einlasstrichter 8 eines Zweischnecken-Extruders 9. Gleichzeitig wird frisches Polyethylen aus dem zweiten Behälter 3 über einen zweiten Schneckenförderer 10 in den Einlasstrichter 8 gefördert. Die beiden unterschiedlichen Sorten von Kunststoff-Granulaten rutschen durch den Einlasstrichter 8 in den Zweischnecken-Extruder 9. Zwei parallele gleichlaufende Schnecken 9a, 9b vermischen und fördern die Granulate vorwärts. Hierbei wird das Material komprimiert, und die dabei entstehenden Druck- und Reibungseffekte führen zu einer Erwärmung auf ca. 180 Grad Celsius. Dadurch werden die thermoplastischen Kunststoffe teilweise verflüssigt und fließen zu einem homogenen fließfähigen Polyethylen-Gemisch zusammen. Die aus dem Recyclat stammenden Aluminium-Partikel werden dabei gleichmäßig in der heißen fließfähigen Kunststoffmasse verteilt.

Ein dritter Schneckenförderer 11 transportiert das pulverförmige CaCO₃ aus dem dritten Behälter 5 über ein Dosiergerät 12 in eine Seitenbeschickung 13 des Zweischnecken-Extruders 9. Dem Polyethylen-Gemisch wird dabei ca. 15 Prozent Calziumcarbonat als mineralischem Füllstoff beigemischt.

Eine Schmelzpumpe 14 pumpt das fließfähige Polyethylen-Gemisch aus dem Zweischnecken-Extruder 9 durch ein Sieb 15 und drückt das Gemisch durch eine Breitschlitzdüse 16. Dadurch wird der kompakte Materialstrang in eine Folie mit einer Dicke von ungefähr 0,5 mm umgeformt. Die Folie kühlt sich dabei etwas ab, bleibt aber plastisch.

Im letzten Schritt wird die von der Breitschlitzdüse 16 geformte Folie über eine Noppenwalze 17 gelegt, wodurch sich ein regelmäßiges Muster von Noppen in die plastische Folie einprägt.

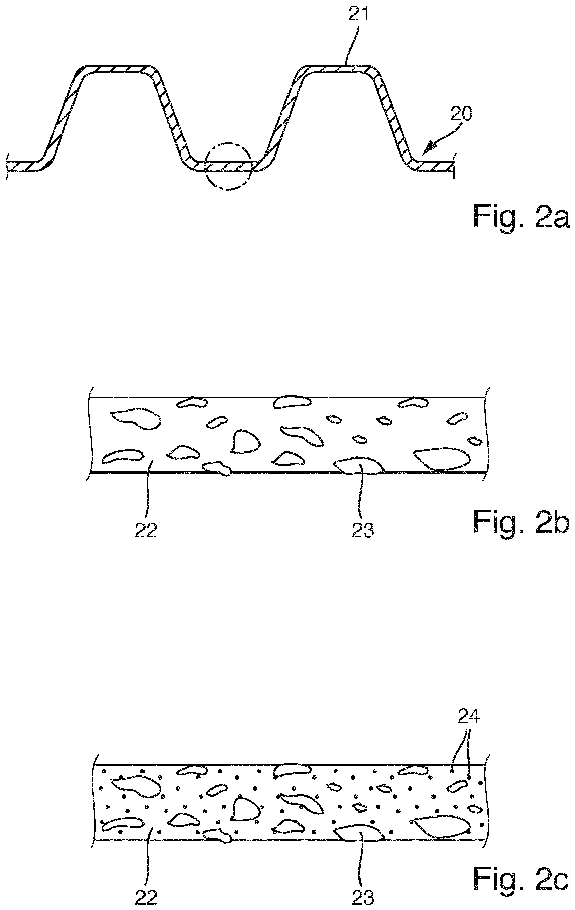

Ergebnis des Verfahrens ist eine Noppenfolie 20 mit einem Querschnitt, wie er in Fig. 2a zu sehen ist. Die Noppen 21 haben die Form eines Kegelstumpfs.

In der ersten Variante gemäß Fig. 2b besteht die Noppenfolie 20 aus einem Polymer-Gemisch 22, welches durch das gemeinsame Extrudieren der beiden Granulate aus dem ersten Behälter 1 und dem zweiten Behälter 3 (vgl. Fig. 1a) entstanden ist. In das Polymer-Gemisch 22 sind kleinere und größere Aluminium-Partikel 23 eingebettet. Die Aluminium-Partikel 23 sind im Wesentlichen gleichmäßig über den Querschnitt verteilt angeordnet. Die einzelnen Aluminium-Partikel 23 haben einen Durchmesser, der erheblich unter der Foliendicke von 0,5 mm liegt.

In der zweiten Variante gemäß Fig. 2c besteht die Noppenfolie 20 aus demselben Polymer-Gemisch 22, enthält aber zusätzlich ca. 15 Gewichtsprozent Calziumcarbonat-Pulver als Füllstoff 24.

### Bezugszeichen

- 1: erster Behälter
- 2: erster Ständer
- 3: zweiter Behälter
- 4: zweiter Ständer
- 5: dritter Behälter
- 6: dritter Ständer
- 7: erster Schneckenförderer
- 8: Einlasstrichter
- 9: Zweischnecken-Extruder
- 9a, 9b: Schnecken (von 9)
- 10: zweiter Schneckenförderer
- 11: dritter Schneckenförderer
- 12: Dosiergerät
- 13: Seitenbeschickung (von 9)
- 14: Schmelzpumpe
- 15: Sieb
- 16: Breitschlitzdüse
- 17: Noppenwalze

- 20: Noppenfolie
- 21: Noppen
- 22: Polymer-Gemisch
- 23: Aluminium-Partikel
- 24: Füllstoff

## Patentansprüche

1. Verfahren zum Herstellen einer Folie aus Polyethylen, insbesondere für den Grundmauerschutz, mit den Schritten:
Bereitstellen eines ersten Granulats aus Recyclat, das aus Kunststoff-Aluminium-Verbundfolie von Lebensmittel-Verpackungen, insbesondere gebrauchter Getränkekartons gewonnen wurde, und das im Wesentlichen aus Polyethylen niedriger Dichte (LDPE) und eingelagerten kleinen Aluminium-Partikeln besteht,
Bereitstellen eines zweiten Granulats, das im Wesentlichen aus Polyethylen hoher Dichte (HDPE) besteht,
gemeinsames Extrudieren der beiden Granulate, wobei die thermoplastischen Kunststoffe teilweise verflüssigt werden und ein homogenes fließfähiges Polyethylen-Gemisch entsteht, in welchem die Aluminium-Partikel aus dem ersten Granulat gleichmäßig verteilt sind,
Drücken des fließfähigen Polyethylen-Gemischs durch eine Breitschlitzdüse (16), sodass eine Folie mit eingelagerten Aluminium-Partikeln geformt wird.

2. Verfahren nach Anspruch 1, **dadurch gekennzeichnet, dass** das gemeinsame Extrudieren der beiden Granulate in einem Zweischnecken-Extruder (9) erfolgt.

3. Verfahren nach Anspruch 1 oder Anspruch 2, **dadurch gekennzeichnet, dass** das Extrudieren der beiden Granulate bei einer Temperatur zwischen 150 und 220 Grad Celsius, vorzugsweise 170 bis 190 Grad Celsius erfolgt.

4. Verfahren nach einem der vorhergehenden Ansprüche, **dadurch gekennzeichnet, dass** das Polyethylen-Gemisch zwischen 25 und 50 Prozent, vorzugsweise 30 bis 40 Prozent Recyclat enthält.

5. Verfahren nach einem der vorhergehenden Ansprüche, **dadurch gekennzeichnet, dass** dem aufgeschmolzenen Polyethylen-Gemisch zwischen 5 und 30 Prozent, vorzugsweise 10 bis 20 Prozent mineralische Füllstoffe beigemischt werden.

6. Verfahren nach einem der vorhergehenden Ansprüche, **dadurch gekennzeichnet, dass** die von der Breitschlitzdüse (16) geformte Folie eine Dicke zwischen 0,3 mm und 0,6 mm, vorzugsweise von ungefähr 0,5 mm hat.

7. Verfahren nach einem der vorhergehenden Ansprüche, **dadurch gekennzeichnet, dass** die in dem Recyclat enthaltenen Aluminium-Partikel kleiner sind als die Dicke der Folie, vorzugsweise nicht größer als 0,3 mm.

8. Verfahren nach einem der vorhergehenden Ansprüche, **dadurch gekennzeichnet, dass** das fließfähige Polyethylen-Gemisch vor dem Drücken durch die Breitschlitzdüse (16) durch ein Sieb (15) gepumpt wird.

9. Verfahren nach einem der vorhergehenden Ansprüche, **dadurch gekennzeichnet, dass** die von der Breitschlitzdüse (16) geformte Folie unmittelbar anschließend über eine Noppenwalze (17) gelegt wird, sodass Noppen in die Folie eingeprägt werden.

10. Folie aus Polyethylen, insbesondere für den Grundmauerschutz, hergestellt durch Extrudieren eines Gemischs aus zwei Granulaten,
wobei das erste Granulat ein Recyclat ist, das aus Kunststoff-AluminiumVerbundfolie von Lebensmittel-Verpackungen, insbesondere gebrauchter Getränkekartons gewonnen wurde und im Wesentlichen aus Polyethylen niedriger Dichte (LDPE) und darin enthaltenen kleinen Aluminium-Partikeln (23) besteht,
und wobei das zweite Granulat im Wesentlichen aus Polyethylen hoher Dichte (HDPE) besteht,
und wobei die aus dem ersten Granulat stammenden Aluminium-Partikel (23) in dem Polymer-Gemisch (22) gleichmäßig über den Querschnitt der Folie verteilt sind.

11. Folie nach Anspruch 10, **dadurch gekennzeichnet, dass** der Anteil des ersten Granulats zwischen 25 und 50 Prozent, vorzugsweise 30 bis 40 Prozent beträgt.

12. Folie nach Anspruch 10 oder Anspruch 11, **dadurch gekennzeichnet, dass** deren Dicke zwischen 0,3 mm und 2,0 mm beträgt, vorzugsweise zwischen 0,4 mm und 0,6 mm.

13. Folie nach einem der Ansprüche 10 bis 12, **dadurch gekennzeichnet, dass** der Durchmesser der aus dem Recyclat stammenden Aluminium-Partikel (23) kleiner, vorzugsweise höchstens halb so groß ist wie die Dicke der Folie.

14. Folie nach Anspruch 23, **dadurch gekennzeichnet, dass** deren Dicke zwischen 0,3 mm und 0,6 mm beträgt und die eingelagerten Aluminium-Partikel (23) einen Durchmesser zwischen 0,1 mm und 0,3 mm haben.

15. Folie nach einem der Ansprüche 10 bis 15, **dadurch gekennzeichnet, dass** die Folie eingeprägte Noppen (21) hat.
